(19) **Europäisches Patentamt**

**European Patent Office**

**Office européen des brevets**

(11) Veröffentlichungsnummer: **0 314 871 B1**

# EUROPÄISCHE PATENTSCHRIFT

(12)

(45) Veröffentlichungstag der Patentschrift:
07.08.91 Patentblatt 91/32

(51) Int. Cl.⁵: **H04N 7/16**

(21) Anmeldenummer: **88109758.8**

(22) Anmeldetag: **18.06.88**

(54) Verfahren zur Erfassung von Gebühren bei gebührenpflichtigen Fernsehsendungen.

(30) Priorität: **31.10.87 DE 3736985**

(43) Veröffentlichungstag der Anmeldung:
**10.05.89 Patentblatt 89/19**

(45) Bekanntmachung des Hinweises auf die Patenterteilung:
**07.08.91 Patentblatt 91/32**

(84) Benannte Vertragsstaaten:
**AT BE CH DE FR GB IT LI LU**

(56) Entgegenhaltungen:
**EP-A- 0 137 960
GB-A- 1 053 554**

(56) Entgegenhaltungen:
**GB-A- 1 090 873
US-A- 4 225 884
NACHRICHTENTECHNISCHE ZEITSCHRIFT,
ntz Band 35, 1982, Heft 6, Berlin, H. Eckhard
Krüger, "Das digitale Fersehkennnungssystem
ZPS" S.368-376**

(73) Patentinhaber: **GRUNDIG E.M.V.
Elektro-Mechanische Versuchsanstalt Max
Grundig holländ. Stiftung & Co. KG.
Kurgartenstrasse 37
W-8510 Fürth/Bay. (DE)**

(72) Erfinder: **Hegendörfer, Max Grundig E.M.V.
Max Grundig
Holländ.Stiftung&Co KG Kurgartenstrasse 37
W-8510 Fürth/Bay (DE)**

## Beschreibung

Die Erfindung betrifft ein Verfahren zur Erfassung von Gebühren bei gebührenpflichtigen Fernsehsendungen mit den im Oberbegriff der Patentansprüche 1 und 2 angegebenen Merkmalen.

Es sind bereits verschiedene sogenannte "pay per view"-Systeme bekannt. Bei einem ersten derartigen System bestellt der Zuschauer beim Sender im voraus bestimmte Programmbeiträge, die er sehen möchte. Bei der Übertragung dieser Programmbeiträge, die verschlüsselt sein können, wird vom Sender ein für den Zuschauer charakteristisches, teilnehmerspezifisches Identifizierungssignal in den momentan ausgestrahlten Programmbeitrag eingefügt. Dieses Identifizierungssignal wird im Empfänger erkannt und steuert beispielsweise einen Entschlüssler zur Entschlüsselung des übertragenen Fernsehsignals, welches anschließend auf dem Bildschirm eines Fernsehempfängers dargestellt wird. Dieses System weist Nachteile auf. So müssen die gewünschten Programmbeiträge im voraus bestellt und bezahlt werden. Ein schnellentschlossener Zuschauer, der sich erst kurz vor Beginn des Programmbeitrages entscheidet, den Programmbeitrag verfolgen zu wollen, ist dazu nicht in der Lage. Ferner können Zuschauer, die einen bestimmten Programmbeitrag bestellt haben, zum Zeitpunkt der Ausstrahlung des Programmbeitrages aber verhindert sind, keinerlei Rückzahlung von Gebühren erwarten.

Bei einem zweiten derartigen System wird zusammen mit dem — beispielsweise verschlüsselten — Fernsehsignal ein Kennsignal übertragen, welches den momentan ausgestrahlten Programmbeitrag als pay-per-view-Sendung kennzeichnet. Wenn der Zuschauer diesen Programmbeitrag sehen möchte, betätigt er eine Freigabetaste auf der Fern- oder Nahbedienung seines Empfängers. Im Empfänger wird durch Vergleich eines im Empfänger gespeicherten digitalen Signals, welches dem momentanen (Guthaben-)Kontostand des Zuschauers entspricht, mit einem Kostensignal für den momentan ausgestrahlten Programmbeitrag ermittelt, ob der (Guthaben-)Kontostand größer ist als das Kostensignal. Ist das der Fall, so wird dem Entschlüssler des Empfängers ein Freigabesignal zugeführt und der (Guthaben-)Kontostand um das Kostensignal des momentanen Programmbeitrages verringert. Das genannte Kostensignal kann in den Austastlücken des Fernsehsignals — vorzugsweise in digitaler Form — übertragen werden.

Aus der EP-A-0137960 ist es bereits bekannt, vom Sender zum Empfänger ein Gebührensignal zu übertragen, welches Auskunft über die Gebühr des momentan übertragenen Fernsehprogrammbeitrages pro Zeiteinheit gibt. Im Empfänger wird unter Verwendung dieses Gebührensignals und eines Zeitgebers eine Gebühr ermittelt, die zur Veränderung eines in einem zum Empfänger gehörigen nichtflüchtigen Speicher abgespeicherten Gebührenstandes verwendet wird.

Weiterhin ist es aus der GB-A-1053554 bekannt, vom Sender zum Empfänger ein Gebührensignal zu übertragen, dessen Übertragungsdichte vom Sender steuerbar ist. Dieses Gebührensignal wird im Empfänger zur Verringerung eines Guthaben-Gebührenstandes verwendet.

Der Erfindung liegt die Aufgabe zugrunde, ein Verfahren zur Erfassung von Gebühren bei gebührenpflichtigen Fernsehsendungen anzugeben, bei dem der Zuschauer auch kurzfristig jede gewünschte Sendung ganz oder teilweise betrachten kann, bei dem der Zuschauer nur für die tatsächliche Betrachtungszeit bezahlen muß, bei dem der Sender die Möglichkeit besitzt, jeden Programmbeitrag mit einer individuell wählbaren Kostengewichtung für den Zuschauer zu versehen, und bei dem die Gebühren, die jeder von mehreren gebührenpflichtige Fernsehsendungen ausstrahlenden Sendereinheiten zugeordnet sind, einzeln erfaßt werden können.

Diese Aufgabe wird durch ein Verfahren mit den im Anspruch 1 oder im nebengeordneten Anspruch 2 angegebenen Merkmalen gelöst. Vorteilhafte Ausgestaltungen ergeben sich aus den Ansprüchen 3 bis 6.

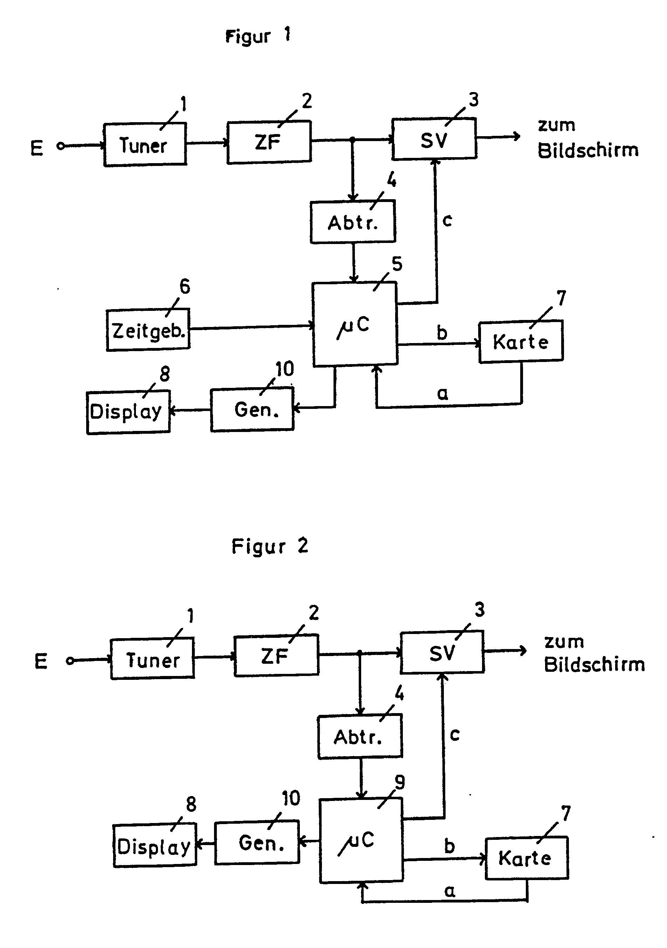

Die Vorteile der Erfindung ergeben sich aus Ausführungsbeispielen, welche im folgenden anhand der Figuren 1 und 2 näher erläutert werden.

Es zeigt die

Figur 1    ein Ausführungsbeispiel für eine erste Ausführungsform der Erfindung, und

Figur 2    ein Ausführungsbeispiel für eine zweite Ausführunsform der Erfindung.

Bei dem in Figur 1 gezeigten Ausführungsbeispiel wird dem Eingang E der gezeigten Schaltung ein Fernsehsignal zugeführt, welches ein digitales Gebührensignal enthält. Bei diesem Fernsehsignal kann es sich um ein von einer Satelliten-Empfangsanlage abgeleitetes Satelliten-Fernsehsignal, ein von einer normalen Hausantenne empfangenes herkömmliches Fernsehsignal (beispielsweise nach dem PAL-Verfahren) oder um ein mittels Kabel übertragenes Kabelfernsehsignal handeln. Dieses Fernsehsignal liegt in verschlüsselter Form vor und wird in einem (nicht gezeichneten) Sender erzeugt, in welchem ferner das Gebührensignal in das Fernsehsignal eingefügt wird.

Das Gebührensignal kann bei Fernsehsignalen mit MAC-Struktur oder rein digitaler Struktur (Glasfaser) innerhalb des vorhandenen digitalen Datenrahmens übertragen werden. Bei Fernsehsignalen herkömmlicher

2

Art (PAL, NTSC, SECAM) sind Verfahren bekannt, digitale Zusatzdaten beispielsweise für eine Tonübertragung in die Austastlücken einzuschachteln oder — wie beim digitalen Zweitonverfahren NICAM — auf eingefügte Hilfsträger zu modulieren. Auch hier kann das Gebührensignal innerhalb des digitalen Datenrahmens übertragen werden.

Im folgenden wird davon ausgegangen, daß es sich bei dem am Eingang E anliegenden Fernsehsignal um ein von der normalen Hausantenne empfangenes PAL-Signal handelt, bei dem das Gebührensignal in Form eines Digitalwortes in der Bildaustastlücke übertragen wird. Dieses Fernsehsignal wird in grundsätzlich bekannter Weise über einen Tuner 1, eine ZF-Stufe 2 und eine Signalverarbeitungsschaltung 3 dem Bildschirm des Empfängers zugeführt. Da es sich bei dem dem Eingang E zugeführten Fernsehsignal um ein verschlüsseltes Signal handelt, gehört der Signalverarbeitungsschaltung 3 auch ein Signalentschlüssler an.

Ferner wird das Ausgangssignal der ZF-Stufe 2 einer Datenabtrennschaltung 4 zugeführt. In dieser Datenabtrennschaltung wird das das Gebührensignal darstellende Digitalwort, welches Auskunft über die Gebührenhöhe des momentan empfangenen Fernsehprogrammbeitrages pro Minute gibt, aus dem Fernsehsignal abgetrennt und einem Mikrocomputer 5 zugeführt. Im Mikrocomputer 5 wird unter Verwendung des Gebührensignals und eines von einem Zeitgeber 6 abgeleiteten Betrachtungszeitintervalles durch eine Rechenoperation eine Gebühr ermittelt.

Diese Gebühr wird unmittelbar nach Beendigung jeder Rechenoperation durch den Mikrocomputer 5 von einem Gebührenguthaben abgebucht, welches in einem nichtflüchtigen Speicher 7, vorzugsweise einer Magnetkarte, abgespeichert ist. Alternativ hierzu ist es auch möglich, mit der Abbuchung vom Gebührenguthaben solange zu warten, bis sich durch aufeinanderfolgende Rechenoperationen ein "runder Währungsbetrag" (z.B. 10 Pfennige) angesammelt hat.

Die verwendete Magnetkarte ist durch einen Schlitz in den Empfänger derart einführbar, daß der Mikrocomputer 5 das momentane Gebührenguthaben auf der Magnetkarte erkennen (dies ist durch die Leitung a angedeutet) und — wie vorstehend beschrieben — von diesem Gebührenguthaben Abbuchungen durchführen kann (dies ist durch die Leitung b angedeutet).

Auf Wunsch kann der Zuschauer auch durch Betätigung einer dafür vorgesehenen Taste auf der Fern- oder Nahbedienung seines Empfängers sein Gebührenguthaben erfragen. Hierzu steuert der Mikrocomputer 5 über einen Zeichengenerator 10 entweder ein Display 8 oder den Bildschirm des Empfängers zur alphanumerischen Darstellung des Gebührenguthabens an.

Möchte der Zuschauer sein Gebührenkonto erhöhen, so entnimmt er die Magnetkarte dem Empfänger und läßt an einer zuständigen Dienststelle, z.B. einer Bank, gegen Barzahlung sein Gebührenkonto aufstocken.

Versäumt der Zuschauer die rechtzeitige Aufstockung seines Gebührenstandes, so wird dies vom Mikrocomputer 5 erkannt, welcher dann wegen des fehlenden Guthabens über eine Leitung c die Signalverarbeitungsschaltung 3 außer Betrieb setzt. Gegebenenfalls kann der Mikrocomputer 5 auch dann, wenn ein vorbestimmter geringer Gebührenstand unterschritten wird, den Zuschauer durch eine alphanumerische Textdarstellung auf dem Display 8 oder dem Bildschirm des Empfängers an die demnächst notwendige Gebührenaufstockung erinnern.

Ferner wird bei der Erfindung im Fernsehsignal weiterhin ein Kennsignal für den Programmanbieter bzw. den Sender des momentan empfangenen Fernsehprogrammbeitrages übertragen. Dieses Kennsignal wird ebenso wie das Gebührensignal als Digitalwort in der Bildaustastlücke des Fernsehsignals übertragen und vom Mikrocomputer 5 erkannt und ausgewertet. Die Magnetkarte 7 enthält für jeden Programmanbieter bzw. Sender einen eigenen Gebührenstapel. Der Mikrocomputer 5 steuert nach Auswertung des Kennsignals den Abbuchungsvorgang derart, daß stets vom richtigen Gebührenstapel abgebucht wird.

Ein Gebührenstapel kann auch einer Gruppe von Programmanbietern bzw. Sendern zugeordnet sein.

Die Figur 2 zeiGt ein Ausführungsbeispiel für eine zweite Ausführungsform der Erfindung. Der Tuner 1, die ZF-Stufe 2, die Signalverarbeitungsschaltung 3, die Datenabtrennstufe 4, die Magnetkarte 7, das Display 8 und der Zeichengenerator 10 sind im wesentlichen mit den entsprechenden Baugruppen des in Figur 1 gezeigten Empfängers identisch. Ihre Arbeitsweise braucht deshalb nicht noch einmal erläutert werden.

Die in Figur 2 gezeigte Ausführungsform der Erfindung unterscheidet sich von der in Figur 1 gezeigten durch das Gebührensignal selbst und durch die Aufgaben bzw. die Arbeitsweise des Mikrocomputers 9.

Bei der in Figur 2 gezeigten Ausführungsform der Erfindung besteht das Gebührensignal aus Taktsignalen, deren Übertragungsdichte vom Sender steuerbar ist. Diese Taktsignale werden vom Mikrocomputer 9 erkannt und unmittelbar zur Verringerung des auf der Magnetkarte 7 abgespeicherten Gebührenstandes verwendet. Die Auswertung eines Zeitintervalles — wie sie im Zusammenhang mit Figur 1 beschrieben wurde — ist bei dieser Ausführungsform nicht notwendig.

Auch bei dieser Ausführungsform wird im Fernsehsignal weiterhin ein Kennsignal für den Programmanbieter bzw. den Sender des momentan empfangenen Fernsehprogrammbeitrages übertragen, welches ebenso ausgewertet wird wie es bereits im Zusammenhang mit Figur 1 beschrieben wurde.

3

Anstelle einer Magnetkarte kann als nichtflüchtiger Speicher 7 auch eine sogenannte smart card verwendet werden. Eine derartige smart card hat im Unterschied zu einer Magnetkarte nicht nur eine reine Speicherfunktion, sondern besitzt darüber hinaus eine Intelligenz (Mikrocomputer), die unter Auswertung des Kennsignals für den Programmanbieter bzw. Sender für die Abbuchung der Gebühren vom richtigen Gebührenstapel sorgt. Smart cards sind bereits grundsätzlich bekannt und zwar beispielsweise aus ihrer Verwendung als Telefonscheckkarten.

Die Vorteile der Erfindung liegen insbesondere darin, daß die Programmanbieter bzw. Sender jedem Programmbeitrag eine individuelle Gebühr zuordnen können. Damit kann beispielsweise der Tatsache Rechnung getragen werden, daß die Beschaffung der einzelnen Programmbeiträge für den Programmanbieter bzw. Sender selbst mit unterschiedlich hohen Kosten verbunden ist. Ferner kann der Sender beispielsweise beliebte Sendungen mit einer anderen Gebühr beaufschlagen als weniger gefragte. Für den Zuschauer ergibt sich insbesondere der Vorteil, daß er jede gewünschte Sendung ganz oder teilweise betrachten kann und er nur für das bezahlen muß, was er tatsächlich gesehen hat.

## Patentansprüche

1. Verfahren zur Erfassung von Gebühren bei gebührenpflichtigen Fernsehsendungen, bei dem vom Sender zum Empfänger ein ein Gebührensignal enthaltendes Fernsehsignal übertragen wird, und bei dem im Empfänger Mittel zur Auswertung des Gebührensignals vorgesehen sind, wobei
— das Gebührensignal Auskunft über die Gebührenhöhe des momentan empfangenen Fernsehprogrammbeitrages pro Zeiteinheit gibt, und
— unter Verwendung des Gebührensignals pro Zeiteinheit und eines mittels eines Zeitgebers ermittelten Betrachtungszeitintervalles des momentan empfangenen Fernsehprogrammbeitrages in einer Recheneinheit eine Gebühr ermittelt wird, welche zur Veränderung eines Gebührenstapels verwendet wird, welcher in einem zum Empfänger gehörigen nichtflüchtigen Speicher abgespeichert ist, **dadurch gekennzeichnet, daß**
— das Fernsehsignal weiterhin ein Kennsignal für den Programmanbieter bzw. Sender des momentan empfangenen Fernsehprogrammbeitrages enthält,
— der zum Empfänger gehörige nichtflüchtige Speicher (7) derart organisiert ist, daß er mehrere Speicherbereiche aufweist und jeder Speicherbereich einem Gebührenstapel zugeordnet ist, und
— die in der Recheneinheit (5) ermittelte Gebühr von demjenigen Gebührenstapel abgebucht wird, der dem Programmanbieter bzw. Sender des momentan empfangenen Fernsehprogrammbeitrages zugeordnet ist.

2. Verfahren zur Erfassung von Gebühren bei gebührenpflichtigen Fernsehsendungen, bei dem vom Sender zum Empfänger ein ein Gebührensignal enthaltendes Fernsehsignal übertragen wird, und bei dem im Empfänger Mittel zur Auswertung des Gebührensignals vorgesehen sind, wobei
— das Gebührensignal aus Taktsignalen besteht, deren Übertragungsdichte vom Sender steuerbar ist,
— die Taktsignale zur Verkleinerung eines Gebührenstapels verwendet werden, welcher in einem zum Empfänger gehörigen nichtflüchtigen Speicher (7) abgespeichert ist, **dadurch gekennzeichnet, daß**
— das Fernsehsignal weiterhin ein Kennsignal für den Programmanbieter bzw. Sender des momentan empfangenen Fernsehprogrammbeitrages enthält,
— der zum Empfänger gehörige nichtflüchtige Speicher (7) derart organisiert ist, daß er mehrere Speicherbereiche aufweist und jeder Speicherbereich einem Gebührenstapel zugeordnet ist, und
— die Taktsignale zur Verkleinerung des Gebührenstapels verwendet werden, der dem Programmanbieter bzw. Sender des momentan empfangenen Fernsehprogrammbeitrages zugeordnet ist.

3. Verfahren nach Anspruch 1 oder 2, **dadurch gekennzeichnet, daß** in einem Gebührenstapel der Gebührenstand eines Programmanbieters bzw. Senders abgespeichert ist.

4. Verfahren nach Anspruch 1 oder 2, **dadurch gekennzeichnet, daß** in einem Gebührenstapel der Gebührenstand einer Gruppe von Programmanbietern bzw. Sendern abgespeichert ist.

5. Verfahren nach einem der Ansprüche 1 bis 4, **dadurch gekennzeichnet, daß** der nichtflüchtige Speicher (7) eine Magnetkarte ist.

6. Verfahren nach einem der Ansprüche 1 bis 4, **dadurch gekennzeichnet, daß** der nichtflüchtige Speicher (7) in einer smart card enthalten ist.

## Claims

1. Method for charge metering in the case of chargeable television transmissions, in which method a television signal containing a charge signal is transmitted from the transmitter to the receiver, and in which means for evaluating the charge signal are provided in the receiver, wherein

— the charge signal provides information on the level of charges per unit time for the television programme contribution currently received, and,

— using the charge signal per unit time and a viewing time interval, determined by means of a timer, of the television programme contribution currently received, a charge is determined in a computing unit and used for changing a stack of charges which is stored in a non-volatile memory belonging to the receiver, characterised in that

— the television signal also contains an identification signal for the programme provider or transmitter of the television programme contribution currently received,

— the non-volatile memory (7) belonging to the receiver is organised in such a manner that it exhibits several storage areas and a stack of charges is allocated to each storage area, and

— the charge determined in the computing unit (5) is debited to that stack of charges which is allocated to the programme provider or transmitter of the television programme contribution currently received.

2. Method for charge metering in the case of chargeable television transmission, in which method a television signal containing a charge signal is transmitted from transmitter to receiver, and in which means for evaluating the charge signal are provided in the receiver, wherein

— the charge signal consists of clock signals the transmission rate of which can be controlled by the transmitter,

— the clock signals are used for reducing a stack of charges which is stored in a non-volatile memory (7) belonging to the receiver, characterised in that

— the television signal also contains an identification signal for the programme provider or transmitter of the television programme contribution currently received,

— the non-volatile memory (7) belonging to the receiver is organised in such a manner that it exhibits several storage areas and a stack of charges is allocated to each storage area, and

— the clock signals are used for reducing the stack of charges which is allocated to the programme provider or transmitter of the television programme contribution currently received.

3. Method according to Claim 1 or 2, characterised in that in a stack of charges there is stored the charge meter reading of a programme provider or transmitter.

4. Method according to Claim 1 or 2, characterised in that in a stack of charges there is stored the charge meter reading of a group of programme providers or transmitters.

5. Method according to Claim 1 to 4, characterised in that the non-volatile memory (7) is a magnetic card.

6. Method according to one of Claims 1 to 4, characterised in that the non-volatile memory (7) is contained in a smart card.

## Revendications

1. Procédé pour la perception de taxes lors d'émissions de télévision à péage, dans lequel on transmet un signal de télévision comprenant un signal de taxe de l'émetteur au récepteur et dans lequel on prévoit dans le récepteur des moyens pour exploiter le signal de taxe, dans lequel :

— le signal de taxe fournit une information concernant la valeur de la taxe par unité de temps pour l'élément de programme de télévision reçu à l'instant ; et

— en utilisant le signal de taxe par unité de temps et un intervalle de temps de vision déterminé par une horloge, on détermine, dans une unité de calcul, une taxe qui est utilisée pour modifier une pile de taxes qui est mémorisée dans une mémoire non volatile appartenant au récepteur, caractérisé en ce que

— le signal de télévision comprend en outre un signal caractéristique pour le distributeur de programme ou l'émetteur de l'élément de programme reçu à l'instant ;

— la mémoire (7) non volatile appartenant au récepteur est organisée de telle manière qu'elle comprend plusieurs zones mémoires et que chaque zone mémoire correspond à une pile de taxes, et

— la taxe déterminée dans l'unité de calcul (5) est débitée de la pile de taxes qui correspond au distributeur ou à l'émetteur de programme de l'élément de programme de télévision reçu à l'instant.

2. Procédé pour la perception de taxes lors d'émissions de télévision à péage, dans lequel on transmet un signal de télévision comprenant un signal de taxe de l'émetteur au récepteur et dans lequel on prévoit dans le récepteur des moyens pour exploiter le signal de taxe, dans lequel

— le signal de taxe est constitué de signaux d'horloge dont le débit de transmission peut être commandé par le récepteur ;

— on utilise les signaux d'horloge pour diminuer une pile de taxes qui est mémorisée dans une mémoire (7) non volatile appartenant au récepteur ;

— le signal de télévision comprend en outre un signal caractéristique pour le distributeur de programme ou l'émetteur de l'élément de programme reçu à l'instant ;

— la mémoire (7) non volatile appartenant au récepteur est organisée de telle manière qu'elle comprend plusieurs zones mémoires et que chaque zone mémoire correspond à une pile de taxes, et

— les signaux d'horloge sont utilisés pour diminuer la pile de taxes qui correspond au distributeur de programme ou à l'émetteur de l'élément de programme reçu à l'instant.

3. Procédé selon la revendication 1 ou 2, caractérisé en ce que l'on mémorise dans une pile de taxes l'état de taxation d'un distributeur de programme ou d'un émetteur.

4. Procédé selon la revendication 1 ou 2, caractérisé en ce que l'on mémorise dans une pile de taxes l'état de taxation d'un groupe de distributeurs de programme ou d'émetteurs.

5. Procédé selon l'une des revendications 1 à 4, caractérisé en ce que la mémoire (7) non volatile est une carte magnétique.

6. Procédé selon l'une des revendications 1 à 4, caractérisé en ce que la mémoire (7) non volatile est contenue dans une carte à microprocesseur.

Figur 1

Figur 2